# EUROPEAN PATENT APPLICATION

(11) **EP 4 280 043 A1**
(43) Date of publication of application: **22.11.2023**
(21) Application number: 22739827.8
(22) Date of filing: 18.01.2022
(51) Int. Cl.: G06F 3/0488, G06F 1/16, G06F 3/0354, G06F 3/038, G06F 3/0481, G06F 3/0486

(54) **ELECTRONIC APPARATUS COMPRISING FOLDABLE DISPLAY AND CONTROL METHOD THEREOF**

(30) Priority: 18.01.2021 KR 20210006811
(71) Applicant: Samsung Electronics Co., Ltd., Suwon-si, Gyeonggi-do 16677 (KR)
(72) Inventor: CHUNG, Jinkyo, Suwon-si, Gyeonggi-do 16677 (KR); LEE, Sangeun, Suwon-si, Gyeonggi-do 16677 (KR); LEE, Won, Suwon-si, Gyeonggi-do 16677 (KR)
(74) Representative: Arnold & Siedsma
(86) International application number: PCT/KR2022/000899
(87) International publication number: WO 2022/154635

(57) **Abstract**

Provided are an electronic device including a foldable display and a control method thereof. The method may include obtaining a first signal, determining a display activate region on a foldable display based on the first signal, displaying an execution screen on the display activate region, obtaining a second signal for designating at least a partial region of the foldable display, determining a touch activate region on the foldable display based on the second signal, obtaining a touch input from the determined touch activate region, and controlling the electronic device in which the execution screen is displayed in the display activate region based on the obtained touch input.

## Description

### Technical Field

The disclosure relates to an electronic device comprising a foldable display and a method of controlling the electronic device, and relates to a method and an electronic device for displaying an execution screen of at least one application on a foldable display and determining a touch activate region within the foldable display.

### Background Art

Mobile electronic devices have been widely used based on mobility. Mobile electronic devices may support not only a mobile communication function but also various user functions, such as a file playback function, a file search function, and a file editing function. A user may operate various functions by using mobile electronic devices.

Displays of mobile electronic devices have gradually become larger due to an increase in visual content. In order to increase a display size, technologies for power efficiency and image quality of touch screens and displays have been developed. In recent years, with the development of flexible and foldable displays, displays larger than related-art displays may be attached to mobile electronic devices. For example, foldable smartphones are smartphones equipped with a display that may be folded by using flexible display technology. When the foldable display is fully unfolded, a wide screen similar to that of a tablet personal computer (PC) may be used, and in a folded state, mobility may be increased. Meanwhile, when using an electronic device including a foldable display, there is a problem in that people around may recognize a content displayed on a screen when using the electronic device in a fully unfolded state at its maximum size in a public space, such as a subway or bus. Accordingly, a technology capable of protecting user privacy is required.

### Disclosure

### Technical Problem

An embodiment of the disclosure may provide a method and an electronic device in which a display activate region of a display is determined by using a form factor of a foldable electronic device and an input signal from a user, and an application execution screen is displayed only in the determined display activate region, so that a size of the display may be adjusted as needed, thereby protecting user privacy.

An embodiment of the disclosure may provide a method and an electronic device in which a touch activate region of a display is determined based on an input signal from a user, thereby preventing a malfunction in which an unintended signal is input from a portion of the display other than the touch activate region when a foldable electronic device is used.

### Technical Solution

As a technical means for achieving the technical objectives described above, disclosed is a method of controlling an electronic device including a foldable display, the method including obtaining a first signal, determining a display activate region on a foldable display based on the first signal, displaying an execution screen on the display activate region, obtaining a second signal for designating at least a partial region of the foldable display, determining a touch activate region on the foldable display based on the second signal, obtaining a touch input from the determined touch activate region, and controlling the electronic device in which the execution screen is displayed in the display activate region based on the obtained touch input.

As a technical means for achieving the technical objectives described above, disclosed is an electronic device including a display module including a foldable display, a signal receiving module for obtaining a first signal for determining a display activate region on the foldable display and a second signal for determining a touch activate region on the foldable display, a memory storing a program including at least one instruction, and at least one processor for executing the at least one instruction stored in the memory. The at least one processor may obtain the first signal and the second signal by controlling the signal receiving module, determine the display activate region on the foldable display based on the obtained first signal, display an execution screen on the display activate region, determine a touch activate region on the foldable display based on the obtained second signal, obtain a touch input from the determined touch activate region, and control an execution screen displayed on the display activate region based on the obtained touch input.

### Description of Drawings

FIG. 1 is a schematic diagram of a method of controlling an electronic device including a foldable display, according to an embodiment of the disclosure.
FIG. 2 is a block diagram of an electronic device according to an embodiment of the disclosure.
FIG. 3 is a flowchart of a method of controlling an electronic device including a foldable display, according to an embodiment of the disclosure.
FIG. 4 is a diagram for describing an operation of determining a display activate region in a foldable display, according to an embodiment of the disclosure.
FIG. 5 is a diagram for describing an operation of releasing a private mode in a foldable display, according to an embodiment of the disclosure.
FIG. 6 is a diagram for describing a form factor of a foldable display used to determine a display activate region, according to an embodiment of the disclosure.
FIG. 7 is a diagram for describing an operation of determining a display activate region and an operation of determining a touch activate region, according to an embodiment of the disclosure.
FIG. 8 is a diagram for describing an operation of determining a display activate region and an operation of determining a touch activate region, according to another embodiment of the disclosure.
FIG. 9 is a diagram for describing a case in which a touch activate region is not included in a display activate region, according to an embodiment of the disclosure.
FIG. 10 is a diagram for describing an operation in which a display activate region is determined through a hovering operation, according to an embodiment of the disclosure.
FIG. 11 is a diagram for describing an operation in which a display activate region is determined through a hovering operation, according to an embodiment of the disclosure.
FIG. 12 is a diagram for describing an operation in which an area of a touch activate region is determined based on a distance between a tip of a stylus pen and a foldable display, according to an embodiment of the disclosure.
FIG. 13 is a diagram for describing an operation of changing a location of a touch activate region, according to an embodiment of the disclosure.
FIG. 14 is a diagram for describing an operation of determining a region in which an application in the form of a pop-up window is displayed as a touch activate region, according to an embodiment of the disclosure.
FIG. 15 is a diagram for describing an operation of determining an activation application and an operation of determining a foldable display region on which the activation application is displayed as a touch activate region, according to an embodiment of the disclosure.
FIG. 16 is a diagram for describing an operation of changing a location of a touch activate region corresponding to an activation application, according to an embodiment of the disclosure.
FIG. 17 is a diagram for describing an operation of saving a pair of a display activate region and a touch activate region in a private mode, according to an embodiment of the disclosure.
FIG. 18 is a block diagram of an electronic device in a network environment according to an embodiment of the disclosure.
FIG. 19 is a block diagram of a display module according to an embodiment of the disclosure.
FIG. 20 is a block diagram illustrating a program according to an embodiment of the disclosure.

### Best Mode

### Mode for Invention

Hereinafter, embodiments of the disclosure will be described in detail with reference to the accompanying drawings such that one of ordinary skill in the art may easily implement the disclosure. However, the disclosure may be implemented in various different forms and is not limited to the embodiments described herein. In addition, in order to clearly describe the disclosure in the drawings, portions irrelevant to the description are omitted, and in relation to the description of the drawings, similar reference numerals may be used for similar or related elements.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the corresponding embodiment. Thus, the terms used herein have to be defined based on the meaning of the terms together with the description throughout the specification. It should be understood that the various embodiments of the present document and the terms used herein are not intended to limit the techniques described in the present document to specific embodiments, and include various modifications, equivalents, and/or alternatives of corresponding embodiments.

An expression used in the singular may encompass the expression in the plural, unless it has a clearly different meaning in the context. In the present document, each of phrases, such as "A or B", "at least one of A and B", "at least one of A or B", "A, B, or C", "at least one of A, B, and C", and "at least one of A, B, or C", may include any one of items listed together with the corresponding phrase from among the phrases, or any possible combinations thereof.

According to various embodiments, each element (e.g., module or program) of the elements described above may include a single object or a plurality of objects, and some of the plurality of objects may be arranged separately from other elements. According to various embodiments, one or more elements or operations from among the corresponding elements described above may be omitted, or one or more other elements or operations may be added. Alternatively or additionally, a plurality of elements (e.g., modules or programs) may be integrated into a single element. In this case, the integrated element may perform one or more functions of each of the plurality of elements identically or similarly to those performed by a corresponding element of the plurality of elements prior to the integration. According to various embodiments, operations performed by modules, programs, or other components may be sequentially, parallel, repetitively or heuristically executed, one or more operations of the operations may be executed in a different order or omitted, or one or more operations may be added.

Terms such as "...unit" and "...module" described in this specification mean a unit for processing at least one function or operation, which may include a unit implemented by hardware, software, or firmware. For example, the term may be used interchangeably with terms, such as logic, logic block, component, or circuit. The module may be an integrally configured component, a minimum unit of the component for performing one or more functions, or a portion thereof. For example, according to an embodiment, the module may be configured in the form of an application-specific integrated circuit (ASIC).

Throughout the specification, when a part is "connected" to another part, the part may not only be "directly connected" to the other part, but may also be "electrically connected" to the other part with another element in between. In addition, when a portion "includes" a certain element, the portion may further include another element instead of excluding the other element, unless otherwise stated.

Expression "configured to" as used herein may be used interchangeably with, for example, "suitable for", "having the capacity to", "designed to", "adapted to", "made to", or "capable of' depending on the situation. The term "configured to" may not necessarily mean only "specifically designed to" in terms of hardware. Instead, in some contexts, the expression "a system configured to" may mean that the system "is capable of doing" in conjunction with other devices or components. For example, the phrase "a processor configured to perform A, B, and C" may mean a dedicated processor (e.g., an embedded processor) for performing corresponding operations or a generic-purpose processor (e.g., CPU or application processor) capable of performing the corresponding operations by executing one or more software programs stored in a memory.

A method of controlling an electronic device including a foldable display, according to an embodiment may include obtaining a first signal, determining a display activate region in a foldable display based on a first signal, displaying an execution screen in the display activate region, obtaining a second signal for designating at least a partial region of the foldable display, determining a touch activate region in the foldable display based on the second signal, obtaining a touch input from the determined touch activate region, and controlling the electronic device on which the execution screen is displayed in the display activate region based on the obtained touch input.

In an embodiment, the first signal may be determined based on a folding angle of the foldable display and a touch input of a user.

In an embodiment, a boundary of the display activate region may be determined based on a region in which the foldable display is folded.

In an embodiment, the second signal may be a signal caused by a dragging operation.

In an embodiment, the second signal may be a signal caused by a hovering operation through a stylus pen.

In an embodiment, an area of the touch activate region may be determined based on a distance between a tip of the stylus pen and the foldable display.

In an embodiment, the touch activate region may be included in at least a portion of the display activate region.

In an embodiment, the determining of the touch activate region in the foldable display based on the second signal may include determining a region in which an application in the form of a pop-up window is displayed from among at least a partial region of the foldable display corresponding to the second signal as the touch activate region.

In an embodiment, when one or more applications in the form of a pop-up window are displayed in at least the partial region of the foldable display designated by the second signal, an application displayed in the largest area within the region designated by the second signal is determined as an activation application, and a region of the foldable display on which the activation application is displayed may be determined as the touch activate region.

In an embodiment, the determined pair of display activate region and touch activate region may be stored in a private mode.

An electronic device according to an embodiment of the disclosure includes a display module including a foldable display, a signal receiving module for obtaining a first signal for determining a display activate region in the foldable display and a second signal for determining a touch activate region on the foldable display, a memory storing a program including at least one instruction, and at least one processor for executing the at least one instruction stored in the memory. The at least one processor may obtain the first signal and the second signal by controlling the signal receiving module, determine a display activate region in the foldable display based on the obtained first signal, display an execution screen in the display activate region, determine a touch activate region in the foldable display based on the obtained second signal, obtain a touch input from the determined touch activate region, and control an execution screen displayed in the display activate region based on the obtained touch input.

In an embodiment, the first signal may be determined based on a folding angle of the foldable display and a touch input of a user.

In an embodiment, a boundary of the display activate region may be determined based on a region in which the foldable display is folded.

In an embodiment, the second signal may be a signal caused by a dragging operation.

In an embodiment, the second signal may be a signal caused by a hovering operation of a stylus pen.

In an embodiment, an area of the touch activate region may be determined based on a distance between a tip of the stylus pen and the foldable display.

In an embodiment, the touch activate region may be included in at least a portion of the display activate region.

In an embodiment, the processor may execute at least one instruction to determine a region on which an application in the form of a pop-up window is displayed from among at least a partial region of the foldable display corresponding to the second signal, as the touch activate region.

In an embodiment, the processor may execute at least one instruction to, when one or more applications in the form of a pop-up window are displayed in at least a partial region of the foldable display designated by the second signal, determine an application displayed in the largest area within the region designated by the second signal as an activation application, and determine a region of the foldable display on which the activation application is displayed as a touch activate region.

In an embodiment, the processor may execute at least one instruction to store the determined pair of display activate region and touch activate region in the memory in a personalized mode.

Hereinafter, the disclosure is described in detail with reference to the accompanying drawings.

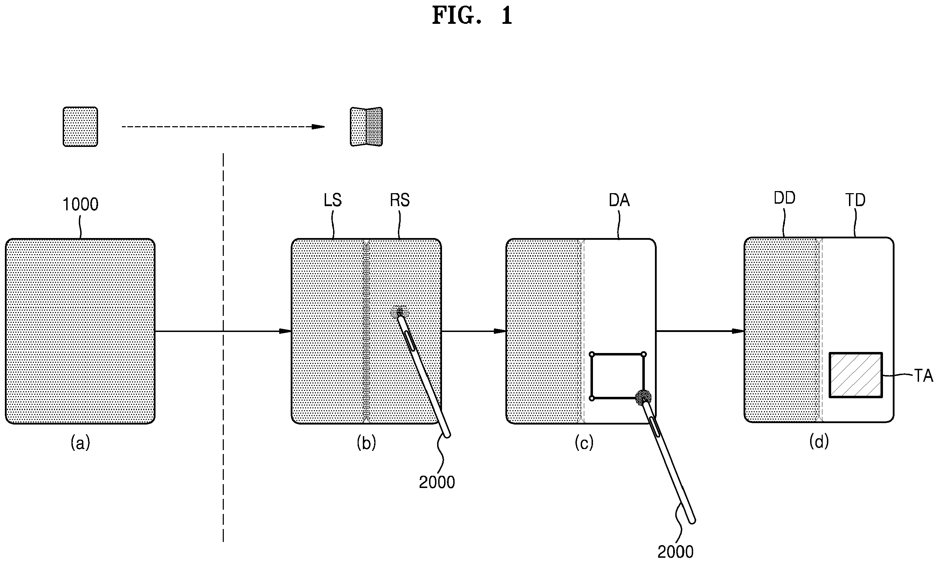

FIG. 1 is a schematic diagram of a method of controlling an electronic device 1000 including a foldable display, according to an embodiment of the disclosure.

The electronic device 1000 may include all types of portable electronic devices, and is not limited to smartphones. The electronic device 1000 may include a foldable display.

In the disclosure, when the electronic device 1000 including a foldable display is in a "full-mode", it may mean that the foldable display has a fully unfolded maximum size state. In addition, when the electronic device 1000 including a foldable display is in a "book-mode", it may mean that the foldable display has a book-like state, rather than a fully unfolded or fully folded state.

In an embodiment, when the electronic device 1000 is in book-mode and an execution screen is displayed on an entire region of the foldable display, due to a folding angle of the electronic device 1000, a person on the left side of a user may easily recognize a screen displayed on a right screen RS of the electronic device 1000, and a person present on the right side of the user may easily recognize a screen displayed on a left screen LS of the electronic device 1000. In this case, there is a problem in that an unspecified number of people may recognize a screen of the electronic device 1000 and user privacy may be violated. In addition, when the electronic device 1000 is in book mode and the user holds the electronic device 1000 with his or her hand, there is a concern that a malfunction in which an unintended signal is input may occur. Accordingly, in an embodiment of the disclosure, in order to protect the privacy of the user of the electronic device 1000 and to prevent a malfunction in which an unintended touch signal is input, a display activate region and a touch activate region may be determined in the foldable display. In an embodiment, a pair of display activate region and touch activate region may be set to a private mode.

Referring to FIG. 1, the electronic device 1000 may switch from a full-mode (a) to a book-mode (b). The electronic device 1000 in the book-mode (b) may include a left screen LS and a right screen RS. The foldable display may be divided into the left screen LS and the right screen RS based on a physical region in which a division is made due to the nature of a flexible terminal.

In an embodiment, the electronic device 1000 may obtain a first signal from a user. For example, the first signal may be a touch input signal through a stylus pen 2000 or a portion of the user's body (e.g., a finger). Referring to (b) of FIG. 1, the electronic device 1000 may obtain a "tap" signal through the stylus pen 2000. For example, the tap signal may be an action of rapidly appearing and then disappearing on the screen or an action of rapidly appearing and then stopping. In an embodiment, the tap signal may correspond to a "click" including a single tap operation or a "double click" including two tap operations.

The electronic device 1000 may determine a display activate region in a foldable display based on the obtained first signal. Referring to (b) and (c) of FIG. 1, for example, when the electronic device 1000 receives a touch input through the stylus pen 2000 on the right screen (RS) of the foldable display, the right screen RS may be determined as a display activate region DA.

The electronic device 1000 may display an execution screen in the determined display activate region. In other words, an execution screen of an application being executed by the electronic device 1000 may be displayed only in the display activate region, and a portion other than the display activate region is a display deactivate region DD so that the display screen may be turned off. As described above, according to an embodiment of the disclosure, the electronic device 1000 including a foldable display may be controlled in a private mode as needed when privacy is required, such as in a public space.

In an embodiment, the user may hold and use the book-mode electronic device 1000 with one hand or hold and use a portion of the display deactivate region DD in a private mode in which an execution screen is displayed on only a portion of the foldable display. In this case, a malfunction in which a touch signal not intended by the user is input from a touch pad or a panel that is held by the user's hand may occur. In order to prevent such a malfunction, in an embodiment of the disclosure, a touch activate region may be determined in a foldable display.

Referring to (c) of FIG. 1, the electronic device 1000 may obtain a second signal for designating at least a partial region of the foldable display. For example, the second signal may be a signal by a dragging operation through the stylus pen 2000 or a portion of the user's body (e.g., a finger). For example, the dragging operation may be an operation of moving from an upper left vertex to a lower right vertex of a designated partial region, but is not limited thereto.

In an embodiment, the electronic device 1000 may determine a touch activate region TA in the foldable display based on the obtained second signal. Referring to FIG. 1, the touch activate region TA may be determined as a region corresponding to the second signal. In an embodiment, a touch signal may be recognized only in the touch activate region TA, and other regions may be a touch deactivate region TD in which the touch signal is not recognized. The electronic device 1000 may obtain a user's touch input from the determined touch activate region TA, and control an execution screen displayed in the display activate region DA or elements of the electronic device 1000 based on the obtained touch input.

Referring to (d) of FIG. 1, the touch activate region TA may be included in the display activate region DA. However, the disclosure is not limited thereto, and the touch activate region TA may be arranged in the display deactivate region DD or may be included in both the display activate region DA and the display deactivate region DD. In other words, determination of the touch activate region TA may be performed independently of determination of the display activate region DA.

In an embodiment, of the entire region of the foldable display, regions other than the display activate region DA may all be the display deactivate region DD. In addition, of the entire region of the foldable display, regions other than the touch activate region TA may all be the touch deactivate region TD.

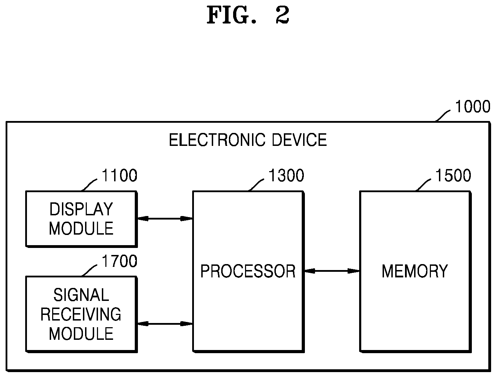

FIG. 2 is a block diagram of the electronic device 1000 according to an embodiment.

Referring to FIG. 2, the electronic device 1000 may include a display module 1100, a processor 1300, a memory 1500, and a signal receiving module 1700. Not all elements shown in FIG. 2 are essential elements of the electronic devices 1000. The electronic device 1000 may be implemented with more elements than those shown in FIG. 2, or the electronic device 1000 may be implemented with fewer elements than those shown in FIG. 2.

The display module 1100 may include a foldable display. The display module 1100 may display an execution screen of at least one application executed in the electronic device 1000. In an embodiment, the display module 1100 may include a panel. The display module 1100 may be configured with, for example, a liquid crystal display, a thin film transistor-liquid crystal display, an organic light-emitting diode, a flexible display, a three-dimensional (3D) display, and an electrophoretic display.

The signal receiving module 1700 may receive a signal determined based on a touch input from a user or a folding angle of the foldable display. For example, the signal receiving module 1700 may obtain a first signal for determining a display activate region and a second signal for determining a touch activate region in the foldable display. In an embodiment, the signal receiving module 700 may be a separate physical element from the display module 1100 or may be included in the display module 1100.

In an embodiment, the signal receiving module 1700 may include a touch pad or panel to receive a touch input signal from a user. The signal receiving module 1700 may receive a touch from the outside (e.g., a digitizer pen, pen, writing instrument, or user's body) and obtain a touch event from the received touch. In an embodiment, the signal receiving module 1700 may receive a touch input from a user through a contact capacitance method, a pressure resistive film method, an infrared sensing method, a surface ultrasonic conduction method, an integral tension measurement method, a piezo effect method, and the like. In an embodiment, the processor 1300 of the electronic device 1000 may remove noise (e.g., a non-contact component due to hand shake or static electricity) from a signal received through the signal receiving module 1700.

In an embodiment, the signal receiving module 1700 may measure a folding angle of the foldable display and may measure a degree of inclination of the electronic device 100 from the ground. For example, the signal receiving module 1700 may determine a form factor of the electronic device 1000 according to the folding angle of the foldable display. When the folding angle of the foldable display is greater than a preset angle, it may be determined that the electronic device 1000 is in the full-mode, and when the folding angle is less than the preset angle, it may be determined that the electronic device 100 is in the book-mode.

The memory 1500 may store a program to be executed by the processor 1300 to be described later to control operations of the electronic device 1000. The memory 1500 may store a program including at least one instruction for controlling operations of the electronic device 1000. Instructions and program codes readable by the processor 1300 may be stored in the memory 1500. In an embodiment, the processor 1300 may be implemented to execute instructions or codes of the program stored in the memory 1500. The memory 1500 may store data input to or output from the electronic device 1000.

The memory 1500 may include at least one type of storage medium from among, for example, a flash memory, a hard disk, a multimedia card micro type, a card type storage unit (e.g., secure digital (SD) or extreme digital (XD) storage unit or the like), random access memory (RAM), static random access memory (SRAM), read-only memory (ROM), electrically erasable programmable read-only memory (EEPROM), programmable read-only memory (PROM), a magnetic storage unit, a magnetic disk, and an optical disk.

The processor 1300 may control overall operations of the electronic device 1000. For example, the processor 1300 may generally control the display module 1100, the signal receiving module 1700, and the memory 1500 by executing the programs stored in the memory 1500.

The processor 1300 may be composed of hardware elements that perform arithmetic, logic, and input/output operations and signal processing. The processor 1300 may be composed of at least one of, for example, a central processing unit, a microprocessor, a graphic processing unit, application specific integrated circuits (ASICs), digital signal processors (DSPs), digital signal processing devices (DSPDs), programmable logic devices (PLDs), and field programmable gate arrays (FPGAs), but is not limited thereto.

The processor 1300 may execute the at least one instruction stored in the memory to obtain a first signal through the signal receiving module 1700 and determine a display activate region in the foldable display based on the obtained first signal. In an embodiment, the first signal may be determined based on a folding angle of the foldable display and a touch input of a user. For example, a mode of the electronic device 1000 is determined (book-mode or full-mode) from the folding angle of the foldable display, and when the electronic device 1000 is in the book-mode, a display activate region may be determined based on a touch input of a user (e.g., tap, dragging, or hovering).

In an embodiment, a boundary of the display activate region may be determined based on a region in which the foldable display is folded. For example, the first signal for determining a display activate region may be a touch input by a user's tap operation, and in this case, the boundary of the display activate region may be determined by a border of the foldable display and the region in which the foldable display is folded (folding line).

In an embodiment, the boundary of the display activate region may be determined only by a user's touch signal. For example, when the first signal for determining the display activate region is a signal by a dragging, drawing, or hovering operation using a stylus pen or a portion of the user's body, the boundary of the display activate region may have a boundary determined by a user's input.

The processor 1300 may execute the at least one instruction stored in the memory 1500 to display an execution screen of at least one application executed in the electronic device 1000 on the determined display activate region. In an embodiment, the display activate region may be composed of one continuous region or may include a plurality of physically separated regions.

In an embodiment, a portion of the entire screen of the foldable display that does not correspond to the display activate region may be determined as a display deactivate region. In an embodiment, a display screen of the display deactivate region may be in an off state or may be in a state in which a screen that does not infringe on user's privacy, such as a clock, calendar, or background screen.

The processor 1300 may execute the at least one instruction stored in the memory 1500 to obtain a second signal through the signal receiving module 1700 and determine a touch activate region in the foldable display based on the obtained second signal. In an embodiment, the second signal may be determined by a user's touch input. For example, the touch activate region may be determined based on the user's touch input (e.g., tap, dragging, or hovering).

In an embodiment, the touch activate region may be determined based on the second signal, which is a dragging operation through a stylus pen or a user's body part (e.g., a finger). Meanwhile, the second signal for determining a touch activate region is not limited to a dragging operation, and may be a drawing or hovering operation. For example, when a user designates at least a partial region of the entire region of the foldable display through a dragging, drawing, or hovering operation, a partial region of the display defined by the corresponding operation may be determined as a touch activate region.

The electronic device 1000 may activate the signal receiving module 1700 such as a touch pad or panel included in the region of the foldable display determined as the touch activate region. In an embodiment, a portion of the entire screen of the foldable display that does not correspond to the touch activate region may be determined as a touch deactivate region. In an embodiment, the signal receiving module 1700 such as a touch pad or panel included in the touch deactivate region may be deactivated. For example, of the entire screen of the foldable display, a touch input may be recognized only in a portion corresponding to the touch activate region, and a touch input may not be recognized in other regions.

In an embodiment, the touch activate region may be composed of one continuous region or may include a plurality of physically separated regions. In addition, in an embodiment, the touch activate region may be included in the display activate region or may not be included in the display activate region, and some may be located within the display activate region and other parts may be located outside the display activate region.

The processor 1300 may execute at least one instruction stored in the memory to obtain a touch input from the determined touch activate region, and control an execution screen displayed in the display activate region or an execution screen of at least one application based on the obtained touch input. In an embodiment, the processor 1300 may control at least one element included in the electronic device 1000 based on a touch input obtained from the determined touch activate region.

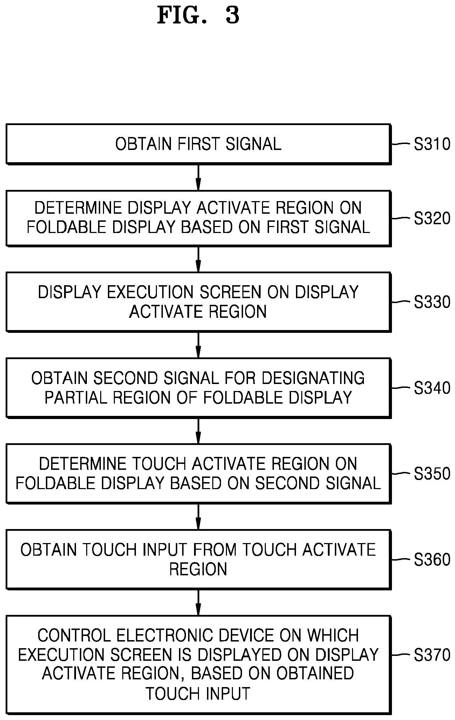

FIG. 3 is a flowchart of a method of controlling an electronic device including a foldable display, according to an embodiment of the disclosure.

In operation S310, a first signal may be obtained. In an embodiment, the first signal may be determined based on at least one of a folding angle of the foldable display and a user's touch input. For example, the user's touch input may be determined by a tap, dragging, drawing, or hovering operation through a stylus pen or a part of a user's body.

In operation S320, a display activate region may be determined in the foldable display based on the obtained first signal. In an embodiment, a boundary of the display activate region may be determined based on a region in which the foldable display is folded. In an embodiment, the boundary of the display activate region may be determined by a first signal obtained from the user. Of the entire region of the foldable display screen, a region other than the region determined as a display activate region may be determined as a display deactivate region.

In operation S330, an execution screen of at least one application may be displayed in the determined display activate region. Meanwhile, in an embodiment, the screen of the display deactivate region may be turned off, or a screen that does not include user personal information, such as a clock, calendar, or background screen, may be displayed.

In operation S340, a second signal for designating a partial region of the foldable display may be obtained. In an embodiment, the second signal may be determined based on a user's touch input. For example, the user's touch input may be determined by a tap, dragging, drawing, or hovering operation through a stylus pen or a part of the user's body. In an embodiment, a partial region of the foldable display designated by the second signal may be included in the display activate region or outside the display activate region. For example, the second signal may designate a partial region of the foldable display independently of the determined display activate region.

In operation S350, a touch activate region may be determined in the foldable display based on the obtained second signal. In an embodiment, of the entire regions of the foldable display screen, a region other than the region determined as the touch activate region may be determined as the touch deactivate region.

In operation S360, a touch input may be obtained from the determined touch activate region. In an embodiment, the user's touch input may be received only through the determined touch activate region from among the entire regions of the foldable display screen. The user's touch input obtained in operation S360 may include a control signal for controlling the electronic device. For example, the user's touch input may be a control signal for controlling at least one application executed in the electronic device or a control signal for controlling an execution screen displayed in the display activate region.

In operation S370, the electronic device on which the execution screen is displayed in the display activate region may be controlled based on the obtained touch input. In an embodiment, a result of controlling the electronic device based on the obtained touch input may be displayed in the display activate region.

In this way, the user's privacy may be protected by displaying an execution screen of at least one application only in the display activate region, and by determining only a portion of the entire region of the foldable display screen as the touch activate region, malfunction due to an untended touch input may be prevented.

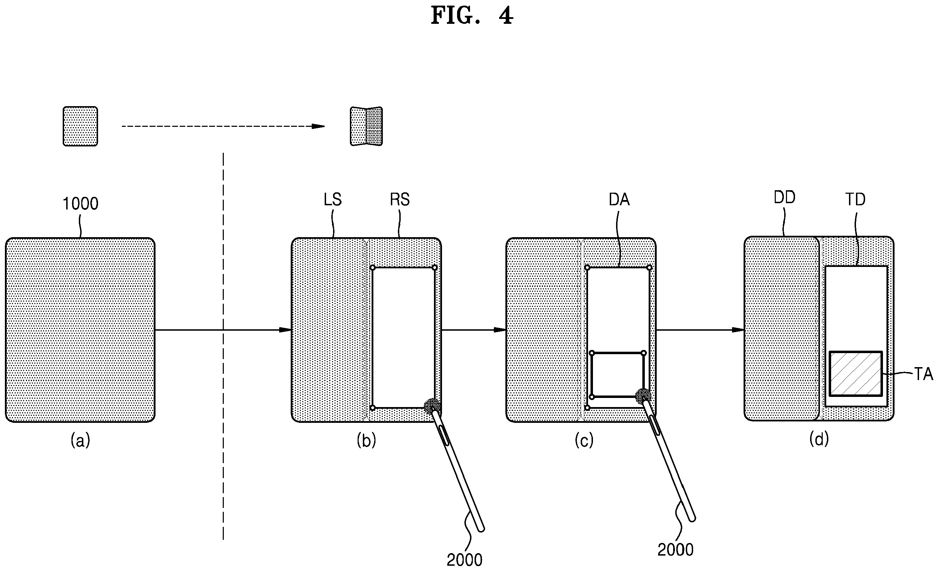

FIG. 4 is a diagram for describing an operation of determining a display activate region DA in a foldable display, according to an embodiment of the disclosure.

Referring to (a) and (b) of FIG. 4, in an embodiment, the electronic device 1000 in the full-mode may be converted to the book-mode.

Thereafter, referring to (b) of FIG. 4, based on a first signal through the stylus pen 2000, the display activate region DA may be determined in the right screen RS in the electronic device 1000 in book-mode. For example, the user may designate a partial region of the right screen RS through the stylus pen 2000. Designation of a region through the stylus pen 2000 may be performed by a dragging operation.

For example, a rectangular region in which a portion at which the stylus pen 2000 is in first contact with the display is the upper left vertex and a portion at which the stylus pen 2000 is in final contact with the display is the lower right vertex may be designated. At this time, the designated rectangular region may be a display activate region DA on which an execution screen is displayed.

In an embodiment, a circular region having a point at which the stylus pen 2000 is in first contact with the display is taken as the center point, and having a straight-line distance from the point at which the stylus pen 2000 is in first contact with the display to a portion at which the stylus pen is in final contact with the display as the radius may be designated. In addition, for example, a circular region having a straight line distance between a portion at which the stylus pen 2000 is in first contact with the display and a portion at which the stylus pen 2000 is in final contact with the display may be designated. In this case, the designated circular region may be the display activate region DA on which the execution screen is displayed.

Meanwhile, a region of the display designated through a dragging operation is not limited to the form described above.

Referring to (c) of FIG. 4, the touch activate region TA may be determined based on a second signal through the stylus pen 2000. For example, a user may configure the touch activate region TA to be included in the display activate region DA. The user may designate a partial region of the foldable display to be determined as the touch activate region TA through the stylus pen 2000. Designation of a region through the stylus pen 2000 may be performed by a dragging operation. For example, a rectangular region in which a portion at which the stylus pen 2000 is in first contact with the display is the upper left vertex and a portion at which the stylus pen 2000 is in final contact with the display is the lower right vertex may be designated. In this case, the designated rectangular region may be the touch activate region TA in which a touch input is activated. Meanwhile, the region of the display designated through the dragging operation is not limited to the rectangular shape described above.

Referring to (d) of FIG. 4, a portion other than the region designated as the display activate region DA by the user may be determined as the display deactivate region DD. No screen may be displayed in the display deactivate region DD, or a preset screen may be displayed. In addition, a portion other than the region designated as the touch activate region TA by the user may be determined as the touch deactivate region TD. In an embodiment, when the touch activate region TA is included in the display activate region DA, the display deactivate region DD may be included in the touch deactivate region TD. In other words, the region of the foldable display may be divided into a region in which the screen is not displayed and touch is deactivated, a region in which the screen is displayed but touch is deactivated, and a region at which the screen is displayed and touch is activated.

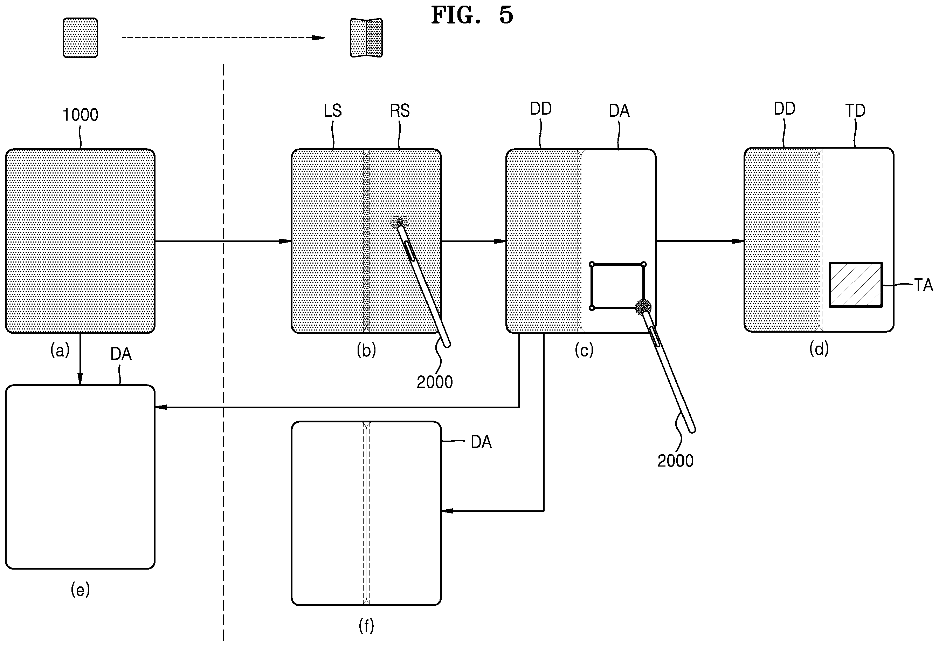

FIG. 5 is a diagram for describing an operation of releasing a private mode in a foldable display, according to an embodiment of the disclosure.

Referring to (a) and (b) of FIG. 5, in an embodiment, the electronic device 1000 in full-mode may be converted to book-mode.

Thereafter, referring to (b) of FIG. 5, based on a first signal through the stylus pen 2000, the book-mode electronic device 1000 may determine the right screen RS region as the display activate region DA. For example, the user may designate the right screen RS through the stylus pen 2000. Designation of a region through the stylus pen 2000 may be performed by a tap operation. For example, when tapping (or double-tapping) a specific portion of the display with the stylus pen 2000, a screen including the corresponding portion from among the left screen LS and the right screen RS may be designated. The designated screen may be the display activation region DA on which an execution screen is displayed.

Referring to (c) of FIG. 5, a boundary of the display activate region DA may be determined based on a region in which the foldable display is folded. For example, the left screen LS or the right screen RS may be distinguished based on the region in which the foldable display is folded. Therefore, for example, when the display activate region DA is determined to be the right screen RS, the display activate region DA may include a region in which the foldable display is folded as a boundary.

Referring back to (c) of FIG. 5, the touch activate region TA may be determined based on a second signal through the stylus pen 2000. For example, the user may configure the touch activate region TA to be included in the display activate region DA. The user may designate a partial region of the foldable display to be determined as the touch activate region TA through the stylus pen 2000. Designation of a region through the stylus pen 2000 may be performed by a dragging operation.

For example, a rectangular region having a portion at which the stylus pen 2000 is in first contact with the display as the upper left vertex and having a portion at which the stylus pen 2000 is in final contact with the display as the lower right vertex may be designated. In this case, the designated rectangular region may be the touch activate region TA in which a touch input is activated.

In an embodiment, a circular region having a portion at which the stylus pen 2000 is in first contact with the display as the center point, and having a straight line distance from the portion at which the stylus pen 2000 is in first contact with the display to a portion at which the stylus pen 2000 is in final contact with the display as the radius may be designated. In addition, for example, a circular region having the straight line distance between a portion at which the stylus pen 2000 is in first contact the display and a portion at which the stylus pen 2000 is in final contact the display as the diameter may be designated. In this case, the designated circular region may be the touch activate region TA in which an execution screen is displayed.

Meanwhile, the region of the display designated by the dragging operation is not limited to the form described above.

Referring to (d) of FIG. 5, a portion other than the region designated as the display activate region DA by the user may be determined as the display deactivate region DD. No screen may be displayed in the display deactivate region DD, or a preset screen may be displayed. In addition, a portion other than the region designated as the touch activate region TA by the user may be determined as the touch deactivate region TD. In an embodiment, when the touch activate region TA is included in the display activate region DA, the display deactivate region DD may be included in the touch deactivate region TD. In other words, the region of the foldable display may be divided into a region in which the screen is not displayed and touch is deactivated, a region in which the screen is displayed but touch is deactivated, and a region in which the screen is displayed and touch is activated.

In an embodiment, the electronic device 1000 may obtain a third signal for releasing a private mode including the display activate region DA and the touch activate region TA. In an embodiment, the third signal may be determined based on a folding angle of the foldable display and a user's touch input.

Referring to (e) of FIG. 5, in an embodiment, when tapping the screen of the electronic device 1000 in full-mode in operation (a) of FIG. 5, the entire region of the foldable display may be the display activate region DA. In other words, when a first signal for designating the display activate region is received in the full-mode, an execution screen may be displayed on the entire region of the foldable display.

In an embodiment, referring to (e) of FIG. 5, the third signal for releasing the private mode may be a signal for changing the electronic device 1000 from book-mode to full-mode. When the electronic device 1000 obtains the third signal, referring to (e) of FIG. 5, designation of only the right screen RS as the display activate region DA is released, and the entire region of the foldable display is updated to the display activate region DA, so that the execution screen may be displayed on the entire region of the foldable display.

Referring to (f) of FIG. 5, the third signal for releasing the private mode may be a user's touch input signal recognized in the display deactivate region DD. In an embodiment, in the state in which the right screen RS of the electronic device 1000 in book-mode is determined to be the display activate region DA in operation (c) of FIG. 5, when tapping the left screen LS as the display deactivate region DD, the left screen LS may also be configured as the display activate region DA. In other words, in the electronic device 1000 in book-mode the entire region of the foldable display is updated to the display activate region DA, and the existing private mode may be canceled.

Meanwhile, in order to prevent malfunction against the user's intention in configuring and releasing the private mode including the display activate region DA and the touch activate region TA, a pop-up notification window may be provided to the user when the mode is changed or the region is configured. In addition, a method of configuring and cancelling the private mode is not limited to the example described above.

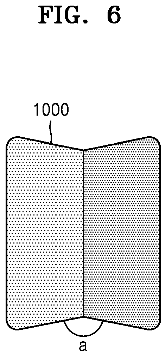

FIG. 6 is a diagram for describing a form factor of a foldable display used to determine a display activate region according to an embodiment of the disclosure.

In an embodiment, the form factor of the foldable display may be a folding angle (a) of the foldable display. In an embodiment, when the folding angle (a) is greater than a preset threshold angle, the electronic device 1000 may be determined to be in the full-mode, and when the folding angle (a) is less than the preset threshold angle, the electronic device 1000 may be determined to be in the book-mode. When the folding angle (a) is 0 degrees, it may be determined that the electronic device 1000 is in a fully folded, close-mode. In an embodiment, the threshold angle for distinguishing the full-mode and the book-mode may be configured to 170 degrees. For example, when the foldable display has a folding angle (a) less than 170 degrees, the electronic device 1000 may be determined to be in the book mode. Meanwhile, the threshold angle is not limited to 170 degrees and may be preset to have other values.

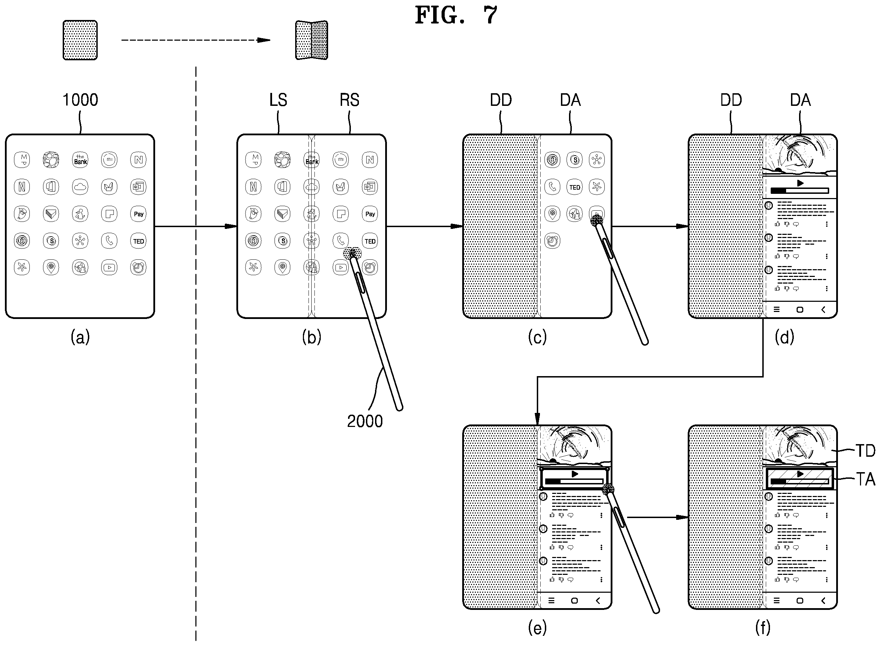

FIG. 7 is a diagram for describing an operation of determining the display activate region DA and an operation of determining a touch activate region TA, according to an embodiment of the disclosure.

In an embodiment, the user may change the electronic device 1000 from the full-mode (a) to the book-mode (b), and then apply a first signal for configuring the right screen RS portion as the display activate region DA.

Referring to (c) of FIG. 7, the right screen RS may be determined as the display activate region DA, and the left screen LS may be determined as the display deactivate region DD. In an embodiment, when the first signal is received while the entire screen of the foldable display is turned off, the display of the display activate region DA determined based on the first signal may be turned on. In an embodiment, when the first signal is received while the entire screen of the foldable display is turned on, the display of the remaining portion other than the display activate region DA determined based on the first signal, that is, the display deactivate region DD may be turned off.

In an embodiment, when a portion of the foldable display is determined to be the display activate region DA, icons of applications installed in the electronic device 1000 may be rearranged to be displayed in the display activate region DA. In an embodiment, the rearrangement operation of application icons may be performed for all applications installed in the electronic device 1000 or only for some applications. A list of application icons for which the rearrangement operation is performed may be preset according to a user's selection or whether a private mode is supported.

Referring back to (c) of FIG. 7, the user may execute one of the applications displayed with rearranged icons in the display activate region DA. For example, the application to be executed may be a video playback application.

Referring to (d) of FIG. 7, an execution screen of the video playback application may be displayed on the display activate region DA.

Referring to (e) of FIG. 7, the user may apply a second signal for designating a portion of the execution screen of the video playback application where a playback bar is displayed as the touch activate region TA.

Referring to (f) of FIG. 7, the region designated by the second signal may be determined as the touch activate region TA, and other regions may be determined as the touch deactivate region TD. In this case, the playback bar portion located within the touch activate region may be touch-activated, and other video and comment portions may be touch-deactivated to prevent an application from malfunctioning due to an unintended touch input. In an embodiment, an edge of the touch activate region TA may be highlighted and displayed.

The determined display activate region DA and the touch activate region TA may configure a private mode. Meanwhile, an embodiment of the disclosure is not limited to the example shown in FIG. 7.

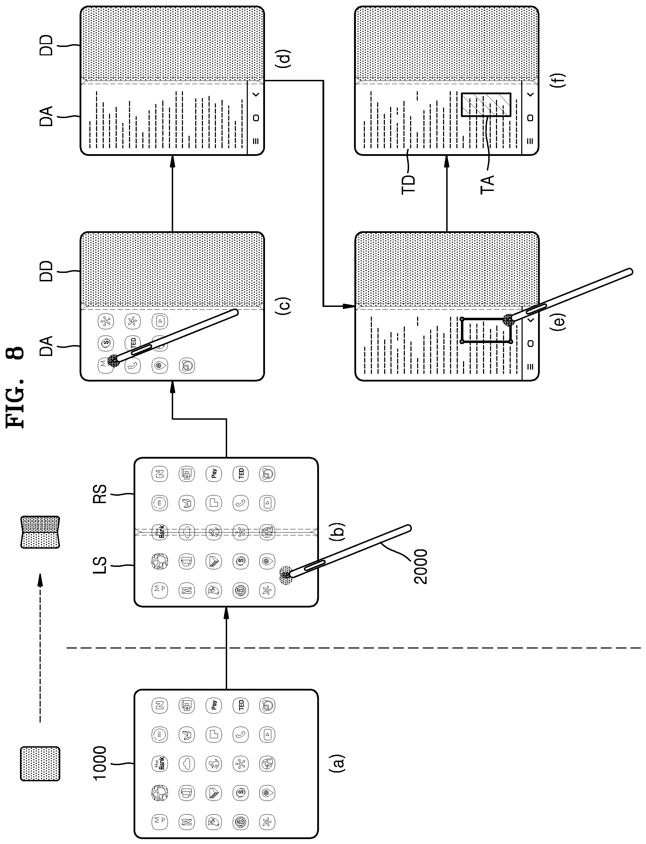

FIG. 8 is a diagram for describing an operation of determining the display activate region DA and an operation of determining the touch activate region TA, according to another embodiment of the disclosure.

In an embodiment, the user may change the electronic device 1000 from the full-mode (a) to the book-mode (b), and then apply a first signal for configuring the left screen LS as the display activate region DA.

Referring to (c) of FIG. 8, the left screen LS may be determined as the display activate region DA, and the right screen RS may be determined as the display deactivate region DD. In an embodiment, when the first signal is received while the entire screen of the foldable display is turned off, the display of the display activate region DA determined based on the first signal may be turned on. In an embodiment, when the first signal is received while the entire screen of the foldable display is turned on, the display of the remaining portion other than the display activate region DA determined based on the first signal, that is, the display deactivate region DD, may be turned off.

Referring back to (c) of FIG. 8, the user may execute one of the applications displayed with rearranged icons in the display activate region DA. For example, the application to be executed may be an e-book reader application.

Referring to (d) of FIG. 8, the execution screen of the e-book reader application may be displayed on the display activate region DA.

Referring to (e) of FIG. 8, the user may apply a second signal for designating a portion of the execution screen of the e-book reader application as the touch activate region TA.

Referring to (f) of FIG. 8, the region designated as the second signal may be determined as the touch activate region TA, and the other regions may be determined as the touch deactivate region TD. In this case, a portion located within the touch activate region TA may be touch-activated, and other portions may be touch-deactivated to prevent an application from malfunctioning due to an unintended touch input.

In an embodiment, a "scroll up/scroll down" control signal or a "turn page" control signal may be received through the touch activate region TA. In an embodiment, a button or the like may be displayed on the touch activate region TA or an edge of the touch activate region TA may be highlighted.

The determined display activate region DA and touch activate region TA may configure a private mode. Meanwhile, an embodiment of the disclosure is not limited to the example shown in FIG. 8.

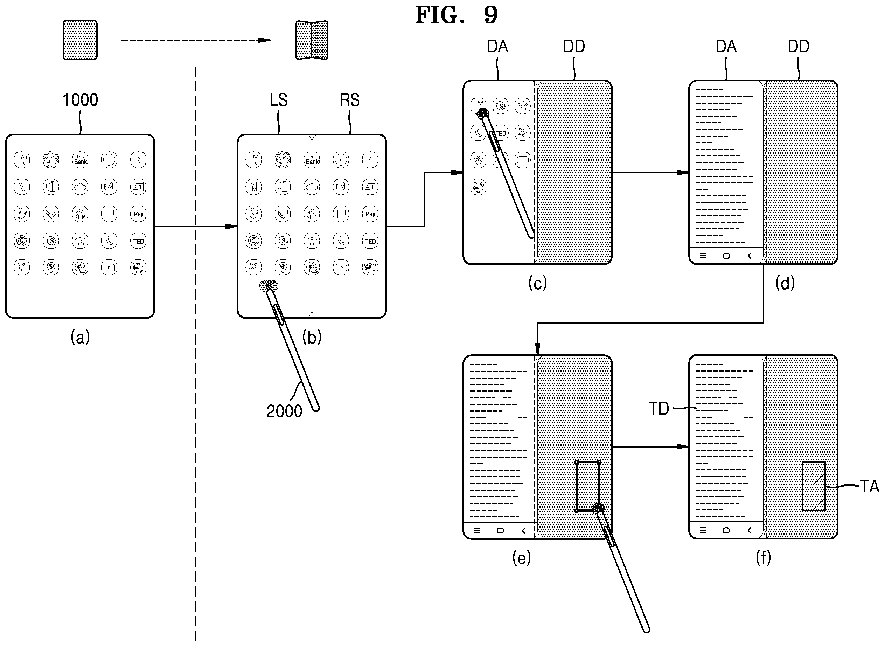

FIG. 9 is a diagram for describing a case in which the touch activate region TA is not included in the display activate region DA, according to an embodiment of the disclosure.

In an embodiment, the user may change the electronic device 1000 from the full-mode (a) to the book-mode (b), and then apply a first signal for configuring the left screen LS portion to the display activate region DA.

Referring to (c) of FIG. 9, the left screen LS may be determined as the display activate region DA, and the right screen RS may be determined as the display deactivate region DD. The user may execute one of the applications displayed with icons rearranged in the display activate region DA. For example, the application to be executed may be an e-book reader application.

Referring to (d) of FIG. 9, an execution screen of the e-book reader application may be displayed on the display activate region DA.

Referring to (e) of FIG. 9, the user may apply a second signal for designating a portion of the display deactivate region DD as a touch activate region TA.

Referring to (f) of FIG. 9, a region designated by the second signal may be determined as the touch activate region TA, and other regions may be determined as the touch deactivate region TD. In this case, a portion located within the touch activate region TA may be touch-activated, and other portions may be touch-deactivated to prevent an application from malfunctioning due to an unintended touch input.

In this case, a region of the foldable display may be divided into a region in which the screen is not displayed and touch is deactivated, a region in which the screen is not displayed but touch is activated, and a region in which the screen is displayed but touch is deactivated.

In an embodiment, a "scroll up/scroll down" control signal or a "turn page" control signal may be received through the touch activate region TA. In an embodiment, on the touch activate region TA, a button or the like may be displayed or an edge of the touch activate region TA may be highlighted.

The determined display activate region DA and touch activate region TA may configure a private mode. However, an embodiment of the disclosure is not limited to the example shown in FIG. 9.

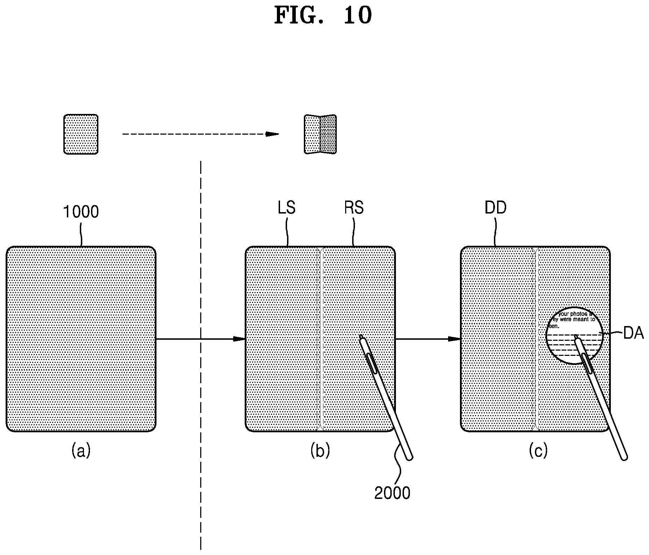

FIG. 10 is a diagram for describing an operation of determining a display activate region DA through a hovering operation, according to an embodiment of the disclosure.

In an embodiment, a first signal for determining the display activate region DA may be determined based on a hovering operation through the stylus pen 2000. In an embodiment, the user may change the electronic device 1000 from the full-mode (a) to the book-mode (b), and then apply a first signal for configuring a portion of the right screen RS as the display activate region DA. In an embodiment, the user may hover the stylus pen 2000 over the display screen. In this case, a portion of the display screen positioned under the stylus pen 2000 may be determined as the display activate region DA. In other words, referring to (c) of FIG. 10, the display activate region DA may have a scope view shape that moves according to a movement of the stylus pen 2000.

In an embodiment, when the user presses a button arranged on the stylus pen 2000 or the electronic device 1000 during a hovering operation through the stylus pen 2000, a scope view at that time may be fixed as the display activate region DA, and the display activate region DA may not move even when the stylus pen 2000 moves thereafter. In another embodiment, when the user stops an operation of pressing a button while performing a hovering operation while pressing a button arranged on the stylus pen 2000, the scope view at that time may be fixed as the display activate region DA, and the display activate region DA may not move even when the stylus pen 2000 moves thereafter.

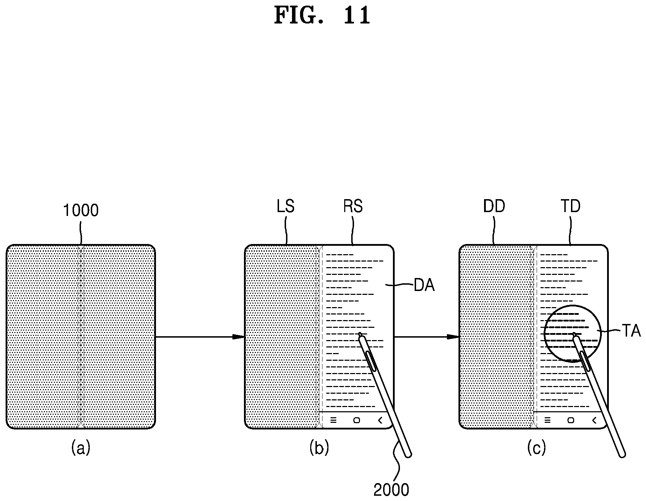

FIG. 11 is a diagram for describing an operation of determining a touch activate region TA through a hovering operation, according to an embodiment of the disclosure.

In an embodiment, a second signal for determining the touch activate region TA may be determined based on a hovering operation through the stylus pen 2000. Referring to (a) and (b) of FIG. 11, the user may configure the right screen RS as the display activate region DA in the electronic device 1000 in the book-mode (a). An execution screen of an application may be displayed in the configured display activate region DA.

Thereafter, referring to (c) of FIG. 11, the user may hover the stylus pen 2000 over the display screen. In this case, the hovering operation may be a second signal for determining a portion of the display screen located under the stylus pen 2000 as the touch activate region TA. For example, when the user presses a button arranged on the stylus pen 2000 or the electronic device 1000 during the hovering operation through the stylus pen 2000, the scope view at that time may be fixed as the touch activate region TA. In another embodiment, when the user stops an operation of pressing a button while performing a hovering operation while pressing a button arranged on the stylus pen 2000, the scope view at that time may be fixed as the touch activate region TA.

In an embodiment, regions other than the determined touch activate region TA may be determined as the touch deactivate region TD.

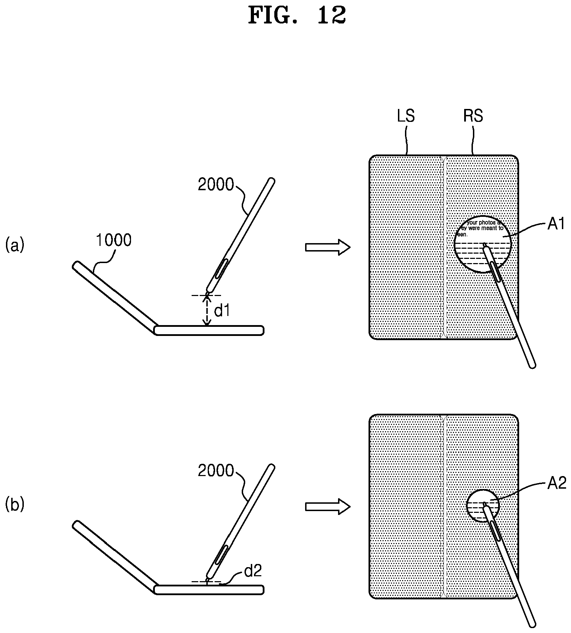

FIG. 12 is a diagram for describing an operation of determining areas A1 and A2 of the touch activate region TA based on distances d1 and d2 between the tip of the stylus pen 2000 and the foldable display, according to an embodiment of the disclosure.

When the user hovers the stylus pen 2000 over the display screen, areas A1 and A2 of the touch activate region TA or areas A1 and A2 of a scope view of the display activate screen DA may be determined based on the distances d1 and d2 between the tip of the stylus pen 2000 and the foldable display. Referring to FIG. 12, when the distance between the tip of the stylus pen 2000 and the foldable display is long, the area of the scope view of the determined display activate region or the area of the touch activate region may increase.

On the other hand, in an embodiment, when a reference point for sensing a relative position of the stylus pen 2000 through a sensor by the electronic device 1000 is located in another portion other than the tip of the stylus pen 2000, the area of the touch activate region TA may be determined based on a distance between the corresponding portion and the foldable display.

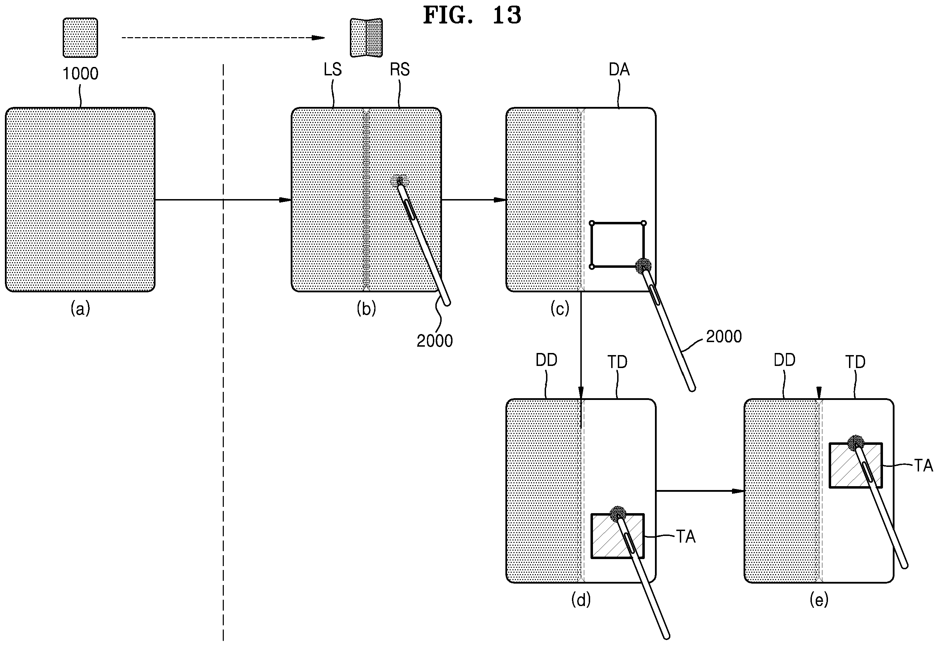

FIG. 13 is a diagram for describing an operation of changing a location of the touch activate region TA, according to an embodiment of the disclosure.

Operations (a), (b), (c), and (d) of FIG. 13 may respectively correspond to operations (a), (b), (c), and (d) of FIG. 1 described above, and may be performed by a similar operation.

Referring to (e) of FIG. 13, when the touch activate region TA determined in operations (c) and (d) of FIG. 13 is selected and moved with the stylus pen 2000 or a part of the user's body, the location of the touch activate region TA may be changed. For example, the user may change the location of the touch activate region TA by selecting an edge portion of the touch activate region TA with the stylus pen 2000 and then dragging the edge portion to a desired location on the display screen. In an embodiment, a button or the like may be displayed on the touch activate region TA or an edge of the touch activate region TA may be highlighted.

However, a method of changing the location of the touch activate region TA is not limited to the example shown in FIG. 13.

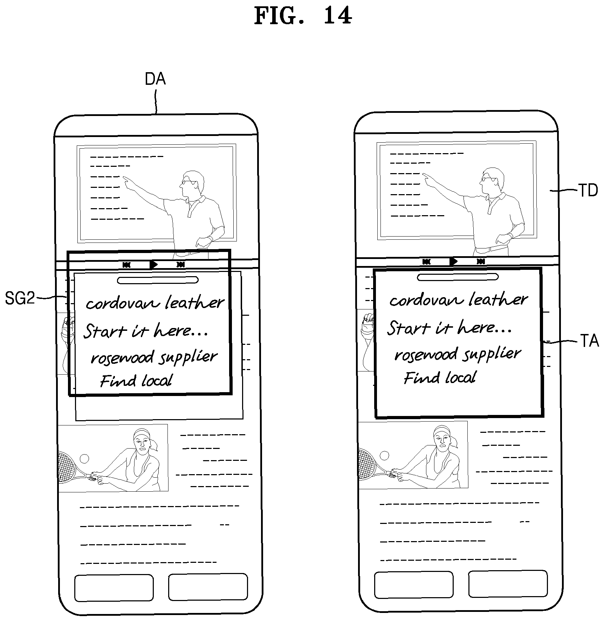

FIG. 14 is a diagram for describing an operation of determining a region in which an application in the form of a pop-up window PW is displayed as a touch activate region TA, according to an embodiment of the disclosure.

In an embodiment, an operation of determining the touch activate region TA on the foldable display based on a second signal may include an operation of determining, as the touch activate region TA, a region in which an application in the form of a pop-up window is displayed from among at least a partial region SG2 of the foldable display designated by the second signal.

Referring to FIG. 14, a memo application in the form of a pop-up window may be displayed in a portion of the display activate region DA. When the second signal for determining the touch activate region TA is received, the electronic device 1000 may determine whether an application in the form of a pop-up window is present within the region SG2 designated by the second signal. At this time, when it is determined that an execution of the application in the form of the pop-up window is displayed within the region SG2 designated by the second signal, a region in which the application is displayed may be determined as the touch activate region TA.

For example, referring to FIG. 14, in a case in which execution screens of a video playback application, an e-book application, and a memo application in the form of a popup window are displayed in the display activate region DA, when more than half of the execution screens of the memo application in the form of the pop-up window are included in the region SG2 designated by the second signal, the electronic device 1000 may determine a region in which the memo application in the form of the pop-up window as the touch activate region TA.

In an embodiment, the electronic device 1000 may provide a notification window to the user to check before determining the application execution screen in the form of a pop-up window as the touch activate region TA.

In an embodiment, a region not determined as the touch activate region DA from among the display activate region DA and a region not included in the display activate region DA may be determined as the touch deactivate region TD. Touch pads and panels in the touch deactivate region TD may be deactivated, and thus, malfunction through unintended touch signals may be prevented. The determined display activate region DA and touch activate region TA may configure a private mode.

For example, referring to FIG. 14, when taking notes in a memo application in the form of a pop-up window while taking a lecture through a video playback application, only a display region on which the memo application is displayed may be touch-activated, and other applications may be prevented from being unintentionally touched while taking notes.

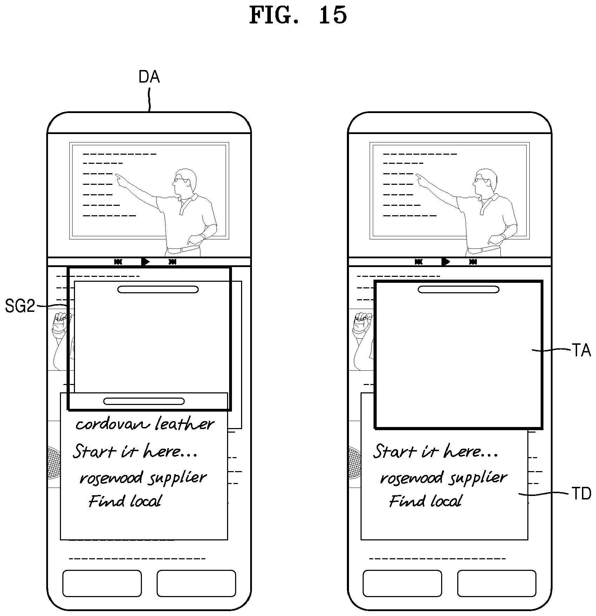

FIG. 15 is a diagram for describing an operation of determining an activate application and an operation of determining a region of the foldable display on which the activate application is displayed as a touch activate region TA.

In an embodiment, the operation of determining the touch activate region TA on the foldable display based on a second signal may include an operation of determining, as the touch activate region TA, a region in which an application in the form of a pop-up window is displayed from among the at least a partial region SG2 of the foldable display designated by the second signal.

Referring to FIG. 15, a memo application in the form of a plurality of pop-up windows may be displayed in a portion of the display activate region DA. In this way, when the application in the form of the plurality of pop-up windows is displayed in the region SG2 of the foldable display designated by the second signal, an application displayed in the largest area within the region SG2 designated by the second signal may be determined as an activate application, and a region of the display in which an execution screen of the determined activate application may be determined as the touch activate region TA.

For example, referring to FIG. 15, execution screens of a video playback application, an e-book application, and a memo application in the form of two pop-up windows may be displayed in the display activate region DA. In this case, the execution screens of the memo application in the form of the two pop-up windows may all be included in the region SG2 designated by the second signal. The electronic device 1000 may determine an application displayed in the largest area within the region SG2 designated by the second signal as an activate application from among the applications in the form of the plurality of pop-up windows, and determine a region of the display in which an execution screen of the determined activate application as the touch activate region TA.

In an embodiment, the electronic device 1000 may provide a notification window to the user to check before determining an application execution screen in the form of a specific pop-up window as the touch activate region TA.

In an embodiment, a region not determined as the touch activate region TA from among the display activate region DA and a region not included in the display activate region DA may be determined as the touch deactivate region TD. Touch pads and panels in the touch deactivate region TD may be deactivated, and thus, malfunction through untended touch signals may be prevented. The determined display activate region DA and touch activate region TA may configure a private mode.

For example, referring to FIG. 15, when taking a lecture through a video playback application and taking notes in a memo application in the form of a pop-up window, only a display region in which the memo application is displayed may be touch-activated, and malfunction in which the screen is switched or terminated due to an untended touch of another application while taking notes may be prevented.

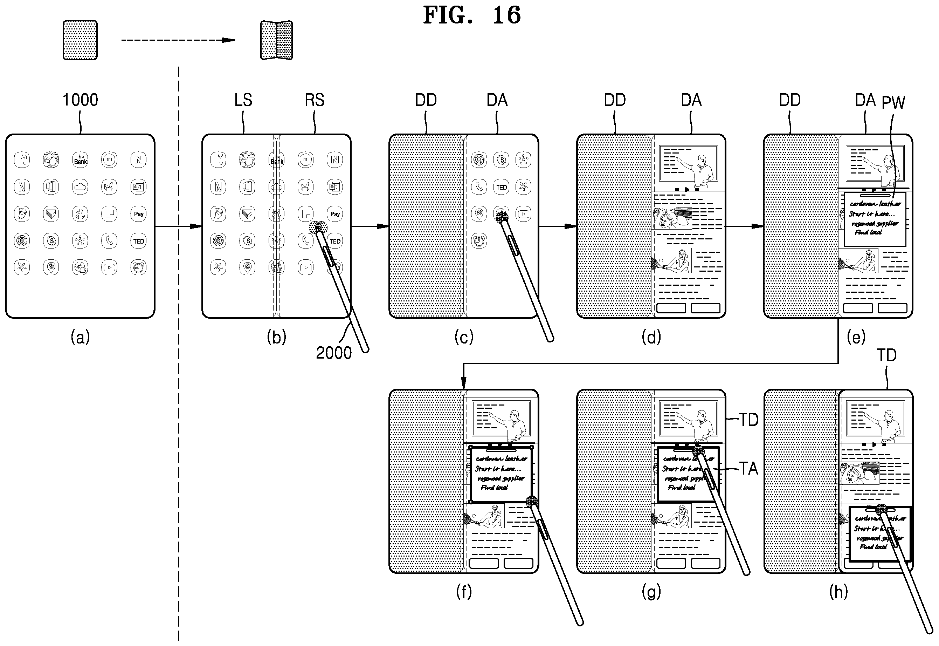

FIG. 16 is a diagram for describing an operation of changing a location of a touch activate region TA corresponding to an activate application, according to an embodiment of the disclosure.

In an embodiment, the user may change the electronic device 1000 from the full-mode (a) to the book-mode (b), and then apply a first signal for configuring the right screen RS portion to the display activate region DA.

Referring to (c) of FIG. 16, the right screen RS may be determined as the display activate region DA, and the left screen LS may be determined as the display deactivate region DD. In an embodiment, when the first signal is received while the entire screen of the foldable display is turned off, the display of the display activate region DA determined based on the first signal may be turned on. In an embodiment, when the first signal is received while the entire screen of the foldable display is turned on, the display of a remaining portion other than the display activate region DA determined based on the first signal, that is, the display deactivate region DD, may be turned off.

Referring to (c) of FIG. 16, the user may execute one of applications displayed with rearranged icons in the display activate region DA. For example, the application to be executed may be a video playback application.

Referring to (d) of FIG. 16, an execution screen of the video playback application may be displayed in the display activate region DA.

Referring to (e) of FIG. 16, the user may execute a memo application in the form of a pop-up window PW. An execution screen of the memo application in the form of the pop-up window PW may be displayed in the display activate region DA of the display.

Referring to (f) of FIG. 16, the user may apply a second signal for designating aa portion in which the execution screen of the memo application in the form of the pop-up window PW as the touch activate region TA.

Referring to (g) of FIG. 16, the execution of the memo application in the form of the pop-up window PW designated by the second signal may be determined as the touch activate region TA, and other regions may be determined as the touch deactivate region TD. In this case, only the memo application located in the touch activate region TA may be touch-activated, and other video parts and comment parts may be touch-deactivated to prevent applications from malfunctioning due to an unintended touch input. In an embodiment, an edge of the touch activate region TA may be highlighted.

Referring to (h) of FIG. 16, when the touch activate region TA determined in operations (f) and (g) iof FIG. 16 is selected and moved with the stylus pen 2000 or a part of the user's body, a location of the touch activate region TA and a location at which an execution screen of the memo application is displayed in the form of a pop-up window PW may be changed. For example, the user may select an edge portion of the touch activate region TA (pop-up window PW) with the stylus pen 2000 and then drag the selected portion to a desired location within the display screen, thereby changing a location of the touch activate region TA (pop-up window PW).

The determined display activate region DA and the touch activate region TA may configure a private mode. However, a method of changing a location of the touch activate region TA is not limited to the example shown in FIG. 16.

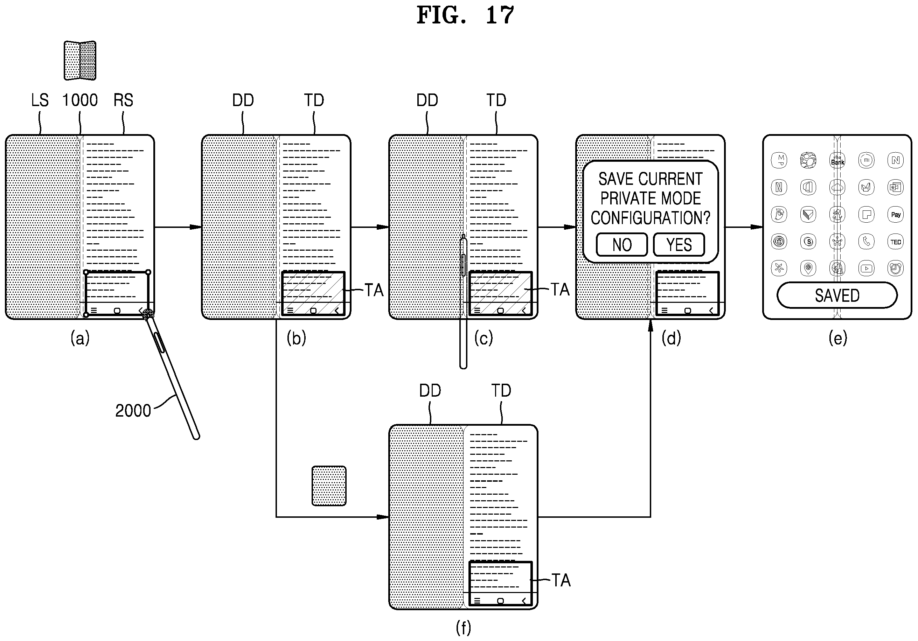

FIG. 17 is a diagram for describing an operation of saving a pair of the display activate region DA and the touch activate region TA in a private mode, according to an embodiment of the disclosure.

Referring to (a) and (b) of FIG. 17, the display activate region DA and the touch activate region TA may be determined in the electronic device 1000 through the various methods described above. The determined display activate region DA and touch activate region TA may configure a private mode.

Referring to (c) of FIG. 17, the stylus pen 2000 may be inserted into the electronic device 1000 while using the private mode including the determined activate region DA and touch activate region TA.

Referring to (d) of FIG. 17, when it is determined that the stylus pen 2000 is inserted while the private mode is being used, the electronic device 1000 may provide a notification window asking whether to save the private mode being used.

Referring to (e) of FIG. 17, the user may save the private mode determined through the notification mode and recall the same settings later. Through the saving operation of the private mode, the inconvenience of the user having to configure the display activate region DA and the touch activate region TA each time may be eliminated.

In an embodiment, referring to (f) of FIG. 17, while using the private mode including the determined display activate region DA and touch activate region TA, the book-mode of the electronic device 1000 may be released (switched to the full-mode). In this case, the electronic device 1000 may provide a notification window asking whether to save the private mode being used, in (d). The user may save the private mode determined through the notification window, in (e), and recall the same setting again later. Through the saving operation of the private mode, the inconvenience of the user having to set the display activate region DA and the touch activate region TA each time may be eliminated.

As such, according to an embodiment of the disclosure, the display activate region DA of a display is determined by using a form factor of a foldable electric device and an input signal from a user, and an execution screen of an application may be displayed in only the determined display activate region DA. For example, because the size of the display may be adjusted according to the user's needs, the user's privacy may be protected. In addition, by determining the touch activate region TA of the display based on an input signal from a user, malfunction in which an unintended signal is input in a part of the display other than the touch activate region may be prevented.

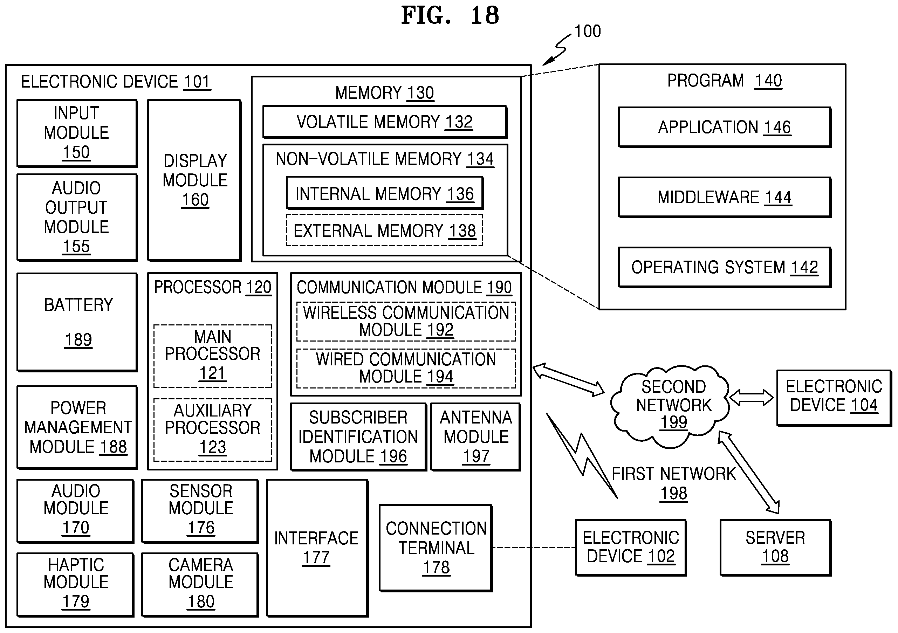

FIG. 18 is a block diagram of an electronic device 101 within a network environment 100 according to an embodiment of the disclosure.

Referring to FIG. 18, in the network environment 100, the electronic device 101 may communicate with an electronic device 102 through a first network 198 (e.g., a short-range wireless communication network) or through a second network 199 (e.g., a long-distance wireless communication network) to communicate with at least one of an electronic device 104 and a server 108. According to an embodiment, the electronic device 101 may communicate with the electronic device 104 through the server 108.

According to an embodiment, the electronic device 101 may include a processor 120, a memory 130, an input module 150, an audio output module 155, a display module 160, an audio module 170, a sensor module 176, an interface 177, a connection terminal 178, a haptic module 179, a camera module 180, a power management module 188, a battery 189, a communication module 190, a subscriber identification module 196, or an antenna module 197.

In some embodiments, in the electronic device 101, at least one of these elements (e.g., the connection terminal 178) may be omitted or one or more other elements may be added. In some embodiments, some of these elements (e.g., the sensor module 176, the camera module 180, or the antenna module 197) may be integrated into one element (e.g., the display module 160).

The processor 120 may, for example, execute software (e.g., a program 140) to control at least one other element (e.g., hardware or software element) of the electronic device 101 connected to the processor 120, and may perform various data processing or calculations.

According to an embodiment, as at least a part of data processing or calculation, the processor 120 may store, in a volatile memory 132, commands or data received from other elements (e.g., the sensor module 176 or the communication module 190), process the commands or data stored in the volatile memory 132, and store resultant data in a non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of or together with the main processor 121. For example, when the electronic device 101 includes the main processor 121 and the auxiliary processor 123, the auxiliary processor 123 may use less power than the main processor 121 or may be configured to be specialized for a designated function. The auxiliary processor 123 may be implemented separately from or as part of the main processor 121.

The auxiliary processor 123 may control at least some of functions or states related to at least one element (e.g., the display module 160, the sensor module 176, or the communication module 190) from among the elements of the electronic device 101, for example, on behalf of the main processor 121 while the main processor 121 is in an inactive (e.g., sleep) state or together with the main processor 121 while the processor 121 is in an active (e.g., application execution) state.

According to an embodiment, the auxiliary processor 123 (e.g., an image signal processor or a communication processor) may be implemented as a part of another functionally related element (e.g., the camera module 180 or the communication module 190). According to an embodiment, the auxiliary processor 123 (e.g., a neural processing device) may include a hardware structure specialized for processing an artificial model.

Artificial intelligence models may be created through machine learning. Such learning may be performed, for example, in the electronic device 101 itself where the artificial intelligence model is performed, or may be performed through a separate server (e.g., the server 108). The learning algorithm may include, for example, supervised learning, unsupervised learning, semi-supervised learning, or reinforcement learning, but is not limited to the examples described above.

The artificial intelligence model may include a plurality of artificial intelligence neural network layers. Artificial neural networks may be deep neural networks (DNN), convolutional neural networks (CNN), recurrent, neural network (RNN), restricted Boltzmann machine (RBM), deep belief network (DBN), bidirectional recurrent deep neural network (BRDNN), deep Q-networks, or a combination of two or more of the above, but are not limited to the examples described above. The artificial intelligence model may include, in addition or alternatively, software structures in addition to hardware structures.

The memory 130 may store various pieces of data used by at least one element (e.g., the processor 120 or the sensor module 176) of the electronic device 101. The data may include, for example, software (e.g., the program 140) and input data or output data related thereto. The memory 130 may include a volatile memory 132 or a non-volatile memory 134.

The program 140 may be stored as software in the memory 130, and may include, for example, an operating system 142, middleware 144, or an application 146.

The input module 150 may receive, from the outside (e.g., a user) of the electronic device 101, a command or data to be used by an element (e.g., the processor 120) of the electronic device 101. The input module 150 may include, for example, a microphone, a mouse, a keyboard, a key (e.g., a button), or a digital pen (e.g., a stylus pen).

The audio output module 155 may output audio signals to the outside of the electronic device 101. The audio output module 155 may include, for example, a speaker or a receiver. The speaker may be used for general purposes, such as multimedia playback or recording playback. The receiver may be used to receive an incoming call. According to an embodiment, the receiver may be implemented separately from the speaker or as part of the speaker.

The display module 160 may visually provide information to the outside (e.g., a user) of the electronic device 101. The display module 160 may include, for example, a display, a hologram device, or a projector, and a control circuit for controlling the device. According to an embodiment, the display module 160 may include a touch sensor configured to detect a touch or a pressure sensor configured to measure the intensity of force generated by the touch.

The audio module 170 may convert sound into an electrical signal or may convert an electrical signal into sound. According to an embodiment, the audio module 170 may obtain sound through the input module 150 or may output sound through an external electronic device (e.g., the electronic device 102) (e.g., a speaker or a headphone) connected directly or wirelessly to the electronic device 101.

The sensor module 176 may detect an operating state (e.g., power or temperature) or an external environment state (e.g., a user state) of the electronic device 101, and may generate an electrical signal or data value corresponding to the detected state. According to an embodiment, the sensor module 176 may include, for example, a gesture sensor, a gyro sensor, an air pressure sensor, a magnetic sensor, an acceleration sensor, a grip sensor, a proximity sensor, a color sensor, an infrared (IR) sensor, a bio sensor, a temperature sensor, a humidity sensor, or an illuminance sensor.

The interface 177 may support one or more designated protocols that may be used to directly or wirelessly connect the electronic device 101 to an external electronic device (e.g., the electronic device 102). According to an embodiment, the interface 177 may include, for example, a high definition multimedia interface (HDMI), a universal serial bus (USB) interface, an SD card interface, or an audio interface.

The connection terminal 178 may include a connector through which the electronic device 101 may be physically connected to an external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert electrical signals into mechanical stimuli (e.g., vibration or movement) or electrical stimuli that a user may perceive through tactile or kinesthetic senses. According to an embodiment, the haptic module 179 may include, for example, a motor, a piezoelectric element, or an electrical stimulation device.

The camera module 180 may capture still images and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least a part of a power management integrated circuit (PMIC), for example.

The battery 189 may supply power to at least one element of the electronic device 101. According to an embodiment, the battery 189 may include, for example, a non-rechargeable primary cell, a rechargeable secondary cell, or a fuel cell.

The communication module 190 may support establishment of a direct (wired) communication channel or a wireless communication channel between the electronic device 101 and an external electronic device (e.g., the electronic device 102, the electronic device 104, or the server 108) and performance of communication through the established communication channel. The communication channel 190 may include one or more processors that operate independently of the processor 120 (e.g., an application processor) and support direct (wired) communication or wireless communication.

According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication module). Among these communication modules, a corresponding communication module may communicate with an external electronic device 104 through a first network 198 (e.g., a short-range communication network, such as Bluetooth, wireless fidelity (WiFi) direct, or infrared data association (IrDA)) or a second network 199 (e.g., a legacy cellular network, a 5G network, a next-generation communication network, the Internet, or a telecommunications network, such as a computer network (e.g., LAN or WAN)). These various types of communication modules may be integrated into one element (e.g., a single chip) or implemented as a plurality of separate elements (e.g., a plurality of chips). The wireless communication module 192 may identify or authenticate the electronic device 101 within a communication network, such as the first network 198 or the second network 199, by using subscriber information (e.g., International Mobile Subscriber Identifier (IMSI)) stored in the subscriber identification module 196.

The wireless communication module 192 may support a 5G network after a 4G network and a next-generation communication technology, for example, new radio (NR) access technology. NR access technologies may support high-speed transmission of high-capacity data (enhanced mobile broadband (eMBB)), minimization of terminal power and access of a plurality of terminals (massive machine type communications (mMTC)), or high reliability and low latency (ultra-reliable and low-latency communications (URLLC)). The wireless communication module 192 may support a high frequency band (mmWave band) to achieve a high data rate, for example. The wireless communication module 192 may support various technologies for ensuring performance in a high frequency band, such as beamforming, massive multiple-input and multiple-output (MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, loss coverage (e.g., 164 dB or less) for realizing mMTC, or U-plane latency (e.g., 0.5 ms or less for each of downlink (DL) and uplink (UL) or 1 ms or less for a round trip).

The antenna module 197 may transmit or receive signals or power to or from the outside (e.g., an external electronic device). According to an embodiment, the antenna module 197 may include an antenna including a radiator formed of a conductor or a conductive pattern formed on a substrate (e.g., a PCB). According to an embodiment, the antenna module 197 may include a plurality of antennas (e.g., an array antenna). In this case, at least one antenna suitable for a communication scheme used in a communication network, such as the first network 198 or the second network 199, may be selected from among the plurality of antennas by, for example, the communication module 190. A signal or power may be transmitted or received between the communication module 190 and an external electronic device through the at least one selected antenna. According to some embodiments, other elements (e.g., a radio frequency integrated circuit (RFIC)) may be additionally formed as a part of the antenna module 197 in addition to the radiator.

According to various embodiments, the antenna module 197 may form a mmWave antenna module. According to an embodiment, the mmWave antenna module may include a printed circuit board, an RFIC which is arranged on or adjacent to a first surface (e.g., a lower surface) of the printed circuit board and is capable of supporting a designated high frequency band (e.g., a mmWave band), and a plurality of antennas (e.g., an array antenna) which is arranged on or adjacent to a second surface (e.g., an upper surface or a side surface) of the printed circuit board and is capable of transmitting or receiving a signal of the designated high frequency band.

At least some of the elements may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, commands or data may be transmitted or received between the electronic device 101 and the external electronic device 104 through the server 108 connected to the second network 199. Each of the external electronic devices 102 or 104 may be of the same or different type as or from the electronic device 101. According to an embodiment, all or part of operations executed in the electronic device 101 may be executed in one or more external electronic devices from among the external electronic devices 102, 104, or 108. For example, when the electronic device 101 needs to perform a certain function or service automatically or in response to a request from a user or another device, instead of executing the function or service by itself or additionally, the electronic device 101 may request one or more external electronic devices to perform at least a part of the function or the service. The one or more external electronic devices receiving the request may execute at least a part of the requested function or service or an additional function or service related to the request, and deliver the execution result to the electronic device 101. The electronic device 101 may provide the result as at least a part of a response to the request as it is or additionally processed. To this end, for example, cloud computing, distributed computing, mobile edge computing (MEC), or client-server computing technology may be used. The electronic device 101 may provide an ultra-low latency service using, for example, distributed computing or mobile edge computing. In another embodiment, the external electronic device 104 may include an Internet of Things (IoT) device. The server 108 may be an intelligent server using machine learning and/or neural networks. According to an embodiment, the external electronic device 104 or the server 108 may be included in the second network 199. The electronic device 101 may be applied to intelligent services (e.g., smart home, smart city, smart car, or health care) based on 5G communication technology and IoT-related technology.

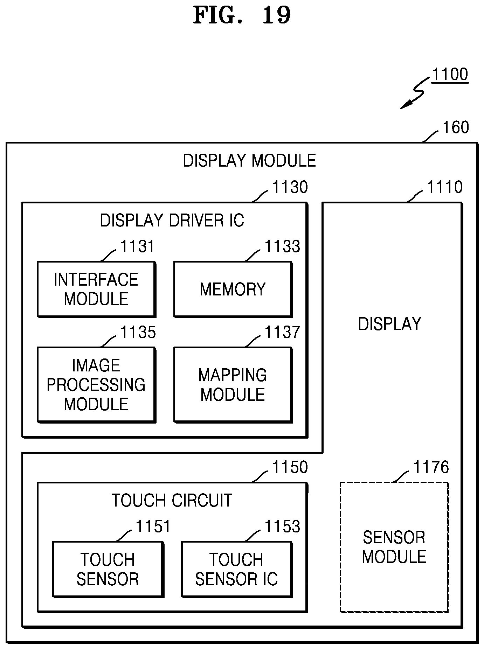

FIG. 19 is a block diagram 1100 of the display module 160 according to an embodiment of the disclosure.

Referring to FIG. 19, the display module 160 may include a display 1110, and a display driver IC (DDI) 1130 for controlling the display 1110.

The DDI 1130 may include an interface module 1131, a memory 1133 (e.g., a buffer memory), an image processing module 1135, or a mapping module 1137. The DDI 1130 may receive, from other elements of the electronic device 101 through the interface module 1131, image information including, for example, image data or an image control signal corresponding to commands for controlling the image data. For example, the image information may be received from the processor 120 (e.g., the main processor 121) (e.g., an application processor) or the auxiliary processor 123 (e.g., a graphics processing unit) that operates independently of a function of the function of the main processor 121. The DDI 1130 may communicate with a touch circuit 1150 or the sensor module 176 through the interface module 1131. In addition, the DDI 1130 may store at least some of the received image information in the memory 1133, for example, in units of frames.

The image processing module 1135 may perform pre-processing or post-processing (e.g., resolution, brightness, or size adjustment) on at least a part of the image data at least based on characteristics of the image data and characteristics of the display 1110.

The mapping module 1137 may generate a voltage value or a current value corresponding to the image data pre-processed or post-processed through the image processing module 135. According to an embodiment, the generation of the voltage value or the current value may be performed at least based on properties of pixels of the display 1110 (e.g., an arrangement of the pixels (RGB stripe or pentile structure) or a size of each sub-pixel).

At least some pixels of the display 1110 may be driven based on, for example, the voltage value and the current value, so that visual information (e.g., text, image, or icon) corresponding to the image data may be displayed through the display 1110.

According to an embodiment, the display module 160 may further include the touch circuit 1150. The touch circuit 1150 may include a touch sensor 1151 and a touch sensor IC 1153 for controlling the touch sensor 1151. The touch sensor IC 1153 may control the touch sensor 1151 to detect, for example, a touch input or a hovering input to a specific location of the display 1110. For example, the touch sensor IC 1153 may detect a touch input or a hovering input by measuring a change in a signal (e.g., a voltage, light amount, resistance, or charge amount) for a specific location of the display 1110.

The touch sensor IC 1153 may provide, to the processor 120, information (e.g., location, area, pressure, or time) on the detected touch input or hovering input. According to an embodiment, at least a part of the touch circuit 1150 (e.g., the touch sensor IC 1153) may be included as the display driver IC 1130, or a part of the display 1110, or as a part of other elements (e.g., the auxiliary processor 123) arranged outside of the display module 160.

According to an embodiment, the display module 160 may further include at least one sensor (e.g., a fingerprint sensor, an iris sensor, a pressure sensor, or an illuminance sensor) of the sensor module 176 or a control circuit therefor. In this case, the at least one sensor or a control circuit therefor may be embedded in a part of the display module 160 (e.g., the display 1110 or the DDI 1130) or a part of the touch circuit 1150. For example, when the sensor module 176 embedded in the display module 160 includes a biometric sensor (e.g., a fingerprint sensor), the biometric sensor may obtain biometric information (e.g., a fingerprint image) related to a touch input through a partial region of the display 1110. For another example, when the sensor 176 embedded in the display module 160 includes a pressure sensor, the pressure sensor may obtain pressure information associated with a touch input through a part or the entire region of the display 1110. According to an embodiment, the touch sensor 1151 or the sensor module 176 may be arranged between pixels of a pixel layer of the display 1110 or above or below the pixel layer.

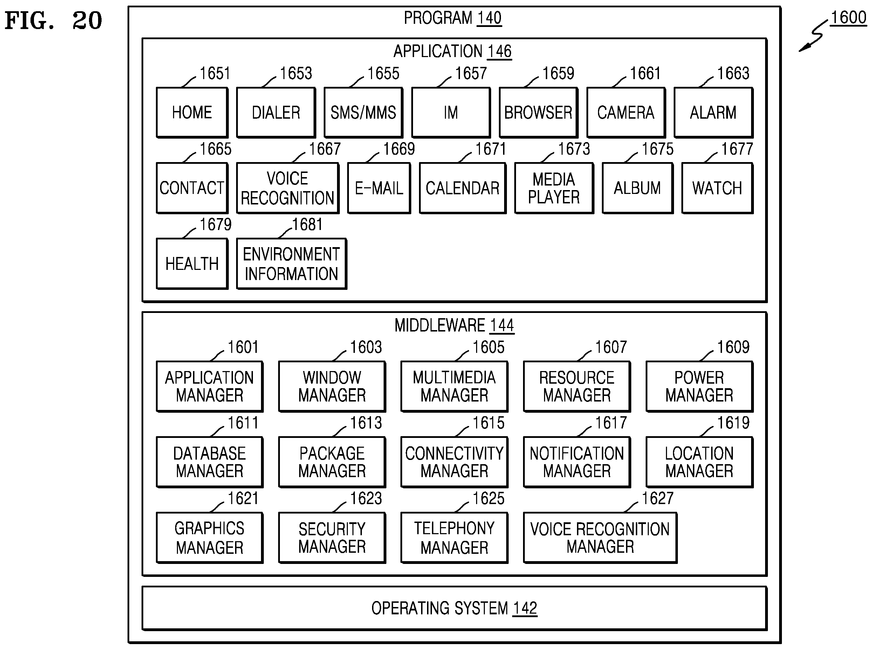

FIG. 20 is a block diagram 1600 illustrating a program 140 according to an embodiment of the disclosure.

According to an embodiment, the program 140 may include an operating system 142, for controlling one or more resources of the electronic device 101, middleware 144, or an application 146 executable in the operating system 142. At least some of the programs 140 may be, for example, preloaded in the electronic device 101 at the time of manufacture, or downloaded or updated from an external electronic device (e.g., the electronic device 102 or 104 or the server 108) or the server when used by a user.

The operating system 142 may control management (e.g., allocation or reallocation) of one or more system resources (e.g., processes, memory, or power) of the electronic device 101. The operating system 142 may additionally or alternatively include other hardware devices of the electronic device 101, such as one or more driver programs for driving the input module 150, the audio output module 155, the audio output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application so that a function or information provided from one or more resources of the electronic device 101 may be used by the application 146. The middleware 144 may include, for example, an application manager 1601, a window manager 1603, a multimedia manager 1605, a resource manager 1607, a power manager 1609, a database manager 1611, a package manager 1613, a connectivity manager 1615, a notification manager 1617, a location manager 1619, a graphics manager 1621, a security manager 1623, a telephony manager 1625, or a voice recognition manager 1627.

For example, the application manager 1601 may manage the lifecycle of the application 146. For example, the window manager 1603 may manage one or more GUI resources used in a screen. For example, the multimedia manager 1605 may identify one or more formats necessary for reproducing media files, and encode or decode a corresponding media file from among the media files by using a codec suitable for the selected format. For example, the resource manager 1607 may manage a source code of the application or a memory space of the memory 130. For example, the power manager 1609 may manage a capacity, temperature, or power of the battery 189, and determine or provide related information necessary for an operation of the electronic device 101 by using the corresponding information from among them. According to an embodiment, the power manager 1609 may interwork with a basic input/output system (BIOS) (not shown) of the electronic device 101.

For example, the database manager 1611 may create, retrieve, or change a database to be used by the application 146. For example, the package manager 1613 may manage installation or update of applications distributed in the form of package files. For example, the connectivity manager 1615 may manage a wireless connection or a direct connection between the external electronic device 101 and an external electronic device. For example, the notification manager 1617 may provide a function for notifying a user of occurrence of a designated event (e.g., an incoming call, a message, or an alarm). For example, the location manager 1619 may manage location information of the electronic device 101. For example, the graphics manager 1621 may manage one or more graphic effects to be provided to a user or a user interface related thereto.

For example, the security manager 1623 may provide system security or user authentication. For example, the telephony manager 1625 may manage a voice call function or a video call function provided by the electronic device 101. For example, the voice recognition manager 1627 may transmit the user's voice data to the server 108 and, at least based on the voice data, receive, from the server 108, a command corresponding to a function to be performed in the electronic device 101 or text data converted at least based on the voice data. According to an embodiment, the middleware 1644 may dynamically delete some existing elements or add new elements. According to an embodiment, at least a part of the middleware 144 may be included as a part of the operating system 142 or may be implemented as separate software different from the operating system 142.

For example, the application 146 may include home 1651, dialer 1653, SMS/MMS 1655, instant message (IM) 1657, browser 1659, camera 1661, alarm 1663, contact 1665, voice recognition 1667, e-mail 1669, calendar 1671, media player 1673, album 1675, watch 1677, health 1679 (e.g., measurement of biometric information, such as exercise amount or blood glucose), or environment information 1681 (e.g., measurement of atmospheric pressure, humidity, or temperature information) applications. According to an embodiment, the application 146 may further include an information exchange application (not shown) capable of supporting information exchange between the electronic device 101 and an external electronic device. The information exchange application may include, for example, a notification relay application configured to transmit designated information (e.g., a call, message, or alarm) to an external electronic device, or a device management application configured to manage an external electronic device. The notification relay application may, for example, transmit, to an external electronic device, notification information corresponding to a specified event (e.g., mail reception) generated in another application (e.g., the e-mail application 1669) of the electronic device 101. Additionally or alternatively, the notification relay application may receive notification information from an external electronic device and provide the information to the user of the electronic device 101.

For example, the device management application may control a power source (e.g., turn-on or turn-off) or function (e.g., brightness, resolution, or focus) of an external electronic device communicating with the electronic device 101 or some element thereof (e.g., a display module or a camera module of the external electronic device). The device management application may additionally or alternatively support installation, deletion, or update of an application operating in an external electronic device.

Various embodiments of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of a machine (e.g., the electronic device 101) may call at least one command from among one or more instructions stored from the storage medium and execute the command. This enables the machine to be operated to perform at least one function according to the at least one called command. The one or more instructions may include code generated by a compiler or code executable by an interpreter. A machine-readable storage medium may be provided in a form of a non-transitory storage medium. Here, the "non-transitory" only denotes that a storage medium is a tangible device and does not contain a signal (for example, electromagnetic waves). This term does not distinguish a case where data is stored in the storage medium semi-permanently and a case where the data is stored in the storage medium temporarily.

According to an embodiment, a method according to various embodiments disclosed in the present document may be provided by being included in a computer program product. The computer program products are products that may be traded between sellers and buyers. The computer program product may be distributed in a form of machine-readable storage medium (for example, a compact disc read-only memory (CD-ROM)), or distributed (for example, downloaded or uploaded) through an application store (for example, Play Store^{™}) or directly or online between two user devices (for example, smartphones). In the case of online distribution, at least a portion of the computer program product may be temporarily stored or temporarily generated in the storage medium that is readable by a machine, such as a server of a manufacturer, a server of an application store, or a memory of a relay server.

The above description of the disclosure is provided for illustration, and it will be understood by one of ordinary skill in the art that various changes in form and details may be readily made therein without departing from essential features and the scope of the disclosure as defined by the following claims. Accordingly, the embodiments described above are examples in all aspects and are not limited. For example, each element described as a single type may be implemented in a distributed manner, and similarly, elements described as distributed may be implemented in a combined form.

The scope of the disclosure is defined by the appended claims rather than the detailed description, and all changes or modifications within the scope of the appended claims and their equivalents will be construed as being included in the scope of the disclosure.

## Claims

1. A method of controlling an electronic device including a foldable display, the method comprising:
obtaining a first signal;
determining a display activate region on a foldable display based on the first signal;
displaying an execution screen on the display activate region;
obtaining a second signal for designating at least a partial region of the foldable display;
determining a touch activate region on the foldable display based on the second signal;
obtaining a touch input from the determined touch activate region; and
controlling the electronic device in which the execution screen is displayed in the display activate region based on the obtained touch input.

2. The method of claim 1, wherein the first signal is determined based on a folding angle of the foldable display and a touch input of a user.

3. The method of claim 1, wherein a boundary of the display activate region is determined based on a region in which the foldable display is folded.

4. The method of claim 1, wherein the second signal is a signal caused by a dragging operation.

5. The method of claim 1, wherein the second signal is a signal caused by a hovering operation through a stylus pen.

6. The method of claim 5, wherein an area of the touch activate region is determined based on a distance between a tip of the stylus pen and the foldable display.

7. The method of claim 1, wherein the touch activate region is included in at least a part of the display activate region.

8. The method of claim 1, wherein the determining of the touch activate region on the foldable display based on the second signal comprises determining a region on which an application in a form of a pop-up window is displayed as the touch activate region from among at least a partial region of the foldable display corresponding to the second signal.

9. The method of claim 8, wherein, when an application in a form of one or more pop-up windows is displayed within at least the partial region of the foldable display designated by the second signal, an application displayed in a largest area within the region designated by the second signal is determined as an activate application, and
a region of the foldable display on which the activate application is displayed is determined as the touch activate region.

10. The method of claim 1, further comprising storing a pair of the determined display activate region and touch activate region in a private mode.

11. An electronic device comprising:
a display module including a foldable display;
a signal receiving module for obtaining a first signal for determining a display activate region on the foldable display and a second signal for determining a touch activate region on the foldable display;
a memory storing a program including at least one instruction; and
at least one processor for executing the at least one instruction stored in the memory,
wherein the at least one processor:
obtains the first signal and the second signal by controlling the signal receiving module;
determines the display activate region on the foldable display based on the obtained first signal;
displays an execution screen on the display activate region;
determines a touch activate region on the foldable display based on the obtained second signal;
obtains a touch input from the determined touch activate region; and
controls an execution screen displayed on the display activate region based on the obtained touch input.

12. The electronic device of claim 11, wherein the first signal is determined based on a folding angle of the foldable display and a touch input of a user.

13. The electronic device of claim 11, wherein a boundary of the display activate region is determined based on a region in which the foldable display is folded.

14. The electronic device of claim 11, wherein the touch activate region is included in at least a part of the display activate region.

15. The electronic device of claim 11, wherein the processor executes the at least one instruction to determine an area on which an application in a form of a pop-up window is displayed as the touch activate region from among at least a partial region of the foldable display corresponding to the second signal.
